# EUROPÄISCHE PATENTSCHRIFT

(11) **EP 3 375 555 B1**
(45) Veröffentlichungstag und Bekanntmachung des Hinweises auf die Patenterteilung: **24.07.2024**
(21) Anmeldenummer: 17161493.6
(22) Anmeldetag: 17.03.2017
(51) Int. Cl.: B23F 19/05, B23F 9/10, B23F 9/02, B23F 19/00, B23F 23/12, B23F 21/22

(54) **VERFAHREN ZUR BEARBEITUNG DER ZAHNFLANKEN VON KEGELRADWERKSTÜCKEN**
METHOD FOR PROCESSING THE TOOTH FLANKS OF BEVEL GEAR WORKPIECES
PROCÉDÉ DE TRAITEMENT DES FLANCS DE DENT DE PIÈCES DE ROUE DENTÉE CONIQUE

(43) Veröffentlichungstag der Anmeldung: 19.09.2018
(73) Patentinhaber: Klingelnberg AG, 8050 Zürich (CH)
(72) Erfinder: Weber, Jürgen, 42499 Hückeswagen (DE)
(74) Vertreter: Janke Scholl Patentanwälte PartG mbB

(56) Entgegenhaltungen:
- EP-A1- 2 535 134
- EP-A1- 2 923 790
- DE-A1- 10 334 493
- DE-A1- 102014 015 587
- DE-U1- 202004 004 480
- US-A- 2 342 232

## Beschreibung

### Gebiet der Erfindung

Gegenstand der Erfindung ist ein Verfahren zum Bearbeiten der Zahnflanken von Kegelradwerkstücken. Insbesondere geht es um das Korrekturbearbeiten der Zahnflanken von getauchten Kegelradwerkstücken.

Es gibt unterschiedlichste Ansätze zur industriellen Herstellung von Kegelrädern.

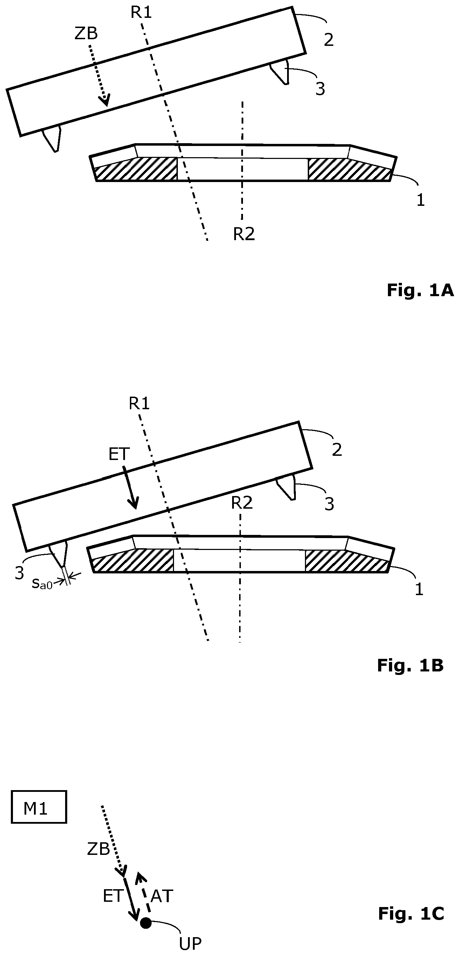

Tellerräder, als Sonderform von Kegelrädern, werden häufig durch ein Tauchverfahren (auch Einstechen genannt) hergestellt, bei dem das Werkzeugprofil im Allgemeinen genau als Zahnlücke im Material eines Tellerradwerkstücks abgebildet wird. Ein entsprechendes Beispiel ist in den Figuren 1A, 1B und 1C in schematischer Form gezeigt.

Bei diesem Tauchverfahren handelt es sich um ein Formverfahren. Es gibt sowohl einzelteilende als auch kontinuierlich teilende Tauch- oder Formverfahren Das Werkzeug 2 (hier ein Messerkopf-Verzahnwerkzeug 2) mit Stabmessern 3 führt zum Fräsen der Zahnlücken relativ zum Tellerradwerkstück 1 eine reine Eintauch- oder Einstechbewegung ET aus. Meist handelt es sich dabei um Verfahren, die im 2-Flankenschnitt, auch Completing genannt, arbeiten. Hierbei werden beide Zahnflanken mit einem Werkzeug und einer Maschineneinstellung (wie in einem der folgenden Absätze beschrieben wird) fertig gestellt. Es gibt auch Tauchverfahren, bei denen die einzelnen Flanken getrennt bearbeitet werden. Diese finden aber in der Praxis nur selten Verwendung.

Typischerweise ist die Werkstückspindelachse R2 (auch Werkstückrotationsachse R2 genannt) gegenüber der Werkzeugspindelachse R1 (auch Werkzeugrotationsachse R1 genannt) geneigt, wie in den Figuren 1A und 1B angedeutet. In Fig. 1A ist die Situation beim Ausführen einer Zustellbewegung ZB gezeigt, um das Werkzeug 2 dem Tellerradwerkstück 1 anzunähern. Fig. 1B zeigt eine Momentaufnahme nach dem Ausführen der Eintauchbewegung ET. Beim Eintauchen wird die Maschineneinstellung der Verzahnungsmaschine im einfachsten Fall beibehalten, da in diesem Fall nur eine geradlinige Eintauch- oder Einstechbewegung ET des Werkzeugs 2 in das Tellerradwerkstück 1 erfolgt. Es gibt in diesem Fall als nur den Eintauchvorschub, der in der Basisverzahnmaschine durch die Bewegung nur einer Achse symbolisiert wird. Je nach Aufbau der realen Verzahnungsmaschine können sich jedoch mehrere Achsen dieser Maschine bewegen. Weitere Details hierzu sind z.B. dem Dokument DE10334493 A1 zu entnehmen, das das Verfahren gemäß dem Oberbegriff des Anspruchs 1 offenbart.

In Fig. 1C ist das bekannte Tauchverfahren in vereinfachter, schematischer Form zusammenfassend dargestellt. Der punktierte Pfeil symbolisiert die Zustellbewegung ZB und der durchgezogene Pfeil, der in Richtung des Tellerradwerkstücks 1 (hier nicht gezeigt) gerichtet ist, symbolisiert die Eintauchbewegung ET. Parallel zu dem durchgezogenen Pfeil ist ein strichlierter Pfeil mit umgekehrtem Richtungssinn gezeigt. Dieser strichlierte Pfeil symbolisiert die Austauchbewegung AT. Nachdem der Zahnfuß einer zu erzeugenden Zahnlücke erreicht ist, erfolgt eine Richtungsumkehr. In Fig. 1C ist das durch die gegenläufigen Pfeile ET und AT und durch den Umkehrpunkt UP dargestellt. Die Orientierung der Zustellbewegung ZB muss nicht zwingend mit der Orientierung der Eintauchbewegung ET übereinstimmen, wie dies in Fig. 1C gezeigt ist. Das Symbol M1 soll andeuten, dass das Tauchen mit einer ersten Maschineneinstellung M1 erfolgt.

Die Maschineneinstellung beim Tauchen ist typischerweise durch die folgenden Größen definiert: Radialdistanz ϕ (auch Radiale genannt), Wiegenwinkel α, Maschinengrundwinkel γ, Tiefenposition χ, Achsversatz η, Neigungs (tilt)- τ und Orientierungswinkel (swivel) σ, sowie den Abstand mccp des Achskreuzungspunktes des Tellerradwerkstücks 1 von der Maschinenmitte der Verzahnungsmaschine. Während des Tauchens können all diese Größen konstant sein, wie bereits beschrieben. Lediglich die Tiefenposition χ ändert sich, wie in Fig. 1B durch den Pfeil ET angedeutet.

Weitere Details zum Tauchen von Kegelrädern kann z.B. dem Buch "Kegelräder; Grundlagen, Anwendungen" des Herausgebers Jan Klingelnberg, Jahr 2008, Springer-Verlag, entnommen werden (siehe dort z.B. die Seiten 105 - 106).

Alternativ können Tellerräder auch durch Wälzverfahren hergestellt werden. In den meisten Fällen ist das Tauchen jedoch produktiver als das Wälzen.

Es hat sich gezeigt, dass es bei getauchten Tellerrädern 1, d.h. bei Tellerrädern 1, die durch ein Tauchverfahren bearbeitet wurden, zu Topografiefehlern, wie Spiralwinkel-, Längsballigkeits-, Höhenballigkeits-, Verwindungs- und Flankenwinkelfehlern, kommen kann. Außerdem können Zahndicken- und Teilungsfehler auftreten. Im Folgenden wird primär die Flankenwinkelfehler und deren Korrektur beschrieben, wobei sich die Erfindung auch auf die anderen genannten Fehler anwenden lässt.

Untersuchungen haben nun ergeben, dass diese Flankenwinkelfehler beispielsweise durch thermische Einflüsse in der Verzahnungsmaschine und durch Verformungen der Tellerradwerkstücke verursacht werden. Als weitere Ursache für das Auftreten von Flankenwinkelfehler konnten Streuungen identifiziert werden, die beim Nachschleifen der Stabmesser der Messerkopf-Verzahnwerkzeuge 2 auftreten.

Die Lage, Richtung oder Form der genannten Flankenwinkelfehler kann als positiv und negativ definiert werden. Sie können nun entgegengesetzt gerichtet, d.h. der Flankenwinkelfehler der konkaven Zahnflanke hat ein anderes Vorzeichen als der der konvexen Zahnflanke, oder gleichgerichtet, die Flankenwinkelfehler beider Zahnflanken haben das gleiche Vorzeichen, auftreten. Derartige Flankenwinkelfehler, die entweder an beiden Zahnflanken in die positive oder an beiden Zahnflanken in die negative Richtung weisen, können beim Tauchen mittels Korrekturen der Maschineneinstellungen nicht zu Null korrigiert werden, da das Tauchen, wie oben erwähnt, mit nur einer Maschineneinstellung die konkave und konvexe Zahnflanke bearbeitet. Dadurch, dass beim Tauchen meist nur eine Maschineneinstellung zur Verfügung steht, können solche Flankenwinkelfehler lediglich über das Ändern der Tauchposition gemittelt werden. Das geht aber nur wenn die Flankenwinkelfehler vom Betrag unterschiedlich sind. Als Tauchposition wird die Relativposition zwischen dem Verzahnwerkzeug 2 und dem Tellerradwerkstück 1 bezeichnet.

Es stellt sich also die Aufgabe, ein Verfahren zur industriellen Herstellung von Tellerrädern bereit zu stellen, das eine Korrektur der Flankenwinkelfehler auch dann ermöglicht, wenn diese an beiden Zahnflanken einer Zahnlücke in die positive oder an beiden Zahnflanken einer Zahnlücke in die negative Richtung weisen. Das Verfahren soll sich auch auf andere Fehler anwenden lassen.

Ein Verfahren der Erfindung gemäß Anspruch 1 zeichnet sich dadurch aus, dass eine kombinierte Nachbearbeitung oder Korrekturbearbeitung der Zahnflanken eines Kegelradwerkstücks durchgeführt wird. Diese kombinierte Nach- oder Korrekturbearbeitung umfasst Teilaspekte des bekannten Freischneidens, bei dem die Zahnflanken einer Zahnlücke durch das Ausführen einer Werkstückdrehung (im Bereich weniger Mikroradiant) überarbeitet werden.

Diesem Freischneiden wird eine Korrekturbearbeitung einer konkaven Zahnflanke überlagert, indem zusätzlich zu der Werkstückdrehung auch andere Größen der Maschineneinstellung geändert werden. Die Korrekturbearbeitung der konkaven Zahnflanke erfolgt in einer zweiten Maschineneinstellung, die sich von der beim Tauchen verwendeten ersten Maschineneinstellung unterscheidet.

Diesem Freischneiden wird auch eine Korrekturbearbeitung einer konvexen Zahnflanke überlagert, indem zusätzlich zu der Werkstückdrehung auch andere Größen der Maschineneinstellung geändert werden. Die Korrekturbearbeitung der konvexen Zahnflanke erfolgt in einer dritten Maschineneinstellung, die sich von der beim Tauchen verwendeten ersten Maschineneinstellung und von der zweiten Maschineneinstellung unterscheidet.

Vorzugsweise erfolgt bei allen Ausführungsformen das Freischneiden der konkaven Zahnflanke indem das Kegelradwerkstück relativ zum Verzahnungswerkzeug eine Werkstückdrehung in eine erste Drehrichtung mit einem vorgegebenem ersten Betrag ausführt und/oder es erfolgt das Freischneiden der konvexen Zahnflanke indem das Kegelradwerkstück relativ zum Verzahnungswerkzeug eine Werkstückdrehung in eine andere Drehrichtung mit einem vorgegebenem zweiten Betrag ausführt, um der Zahnlücke eine vergrösserte Lückenweite zu geben.

Die Verwendung der Zahlwörter "zweite" und "dritte" soll keine Reihenfolge vorgeben. Die dritte Maschineneinstellung kann bei allen Ausführungsformen auch vor der zweiten Maschineneinstellung zur Anwendung gebracht werden.

Die kombinierte Nach- oder Korrekturbearbeitung (erstes modifiziertes Tauchverfahren genannt) hat den Vorteil, dass nicht mehr Zeit aufgewendet werden muss als beim klassischen Freischneiden, oder dass nur unwesentlich mehr Zeit aufgewendet werden muss. Das liegt darin begründet, dass zum Freischneiden und Korrekturbearbeiten der einen Zahnflanke nur eine Umstellung von der ersten Maschineneinstellung in eine zweite Maschineneinstellung und zum Freischneiden und Korrekturbearbeiten der anderen Zahnflanke eine Umstellung von der zweiten Maschineneinstellung in eine dritte Maschineneinstellung erfolgen muss.

Es sind aber auch Ausführungsformen der Erfindung möglich (zweites modifiziertes Tauchverfahren genannt), bei denen das Freischneiden vor dem jeweiligen Ändern der Maschineneinstellungen erfolgt. In diesem Fall erfolgt das Freischneiden der beiden Zahnflanken mit der ersten Maschineneinstellung, die auch beim Tauchen verwendet wurde, lediglich durch eine Werkstückverdrehung in beiden Drehrichtungen. Zum Korrekturbearbeiten der einen Zahnflanke erfolgt dann eine Umstellung von der ersten Maschineneinstellung in eine zweite Maschineneinstellung und zum Korrekturbearbeiten der anderen Zahnflanke eine Umstellung von der zweiten Maschineneinstellung in eine dritte Maschineneinstellung.

Die Erfindung lässt sich sowohl auf kontinuierlich ausgeführte Tauchverfahren als auch auf einzelteilend ausgeführte Tauchverfahren anwenden. Anders als einzelteilend ausgeführten Tauchverfahren, wird beim kontinuierlichen Teilverfahren stets zusätzlich zum Drehantreiben des Verzahnungswerkzeugs das Kegelradwerkstück gekoppelt drehangetrieben.

Beim Freischneiden und beim Nachbearbeiten/Korrekturbearbeiten wird auch stets mindestens das Verzahnungswerkzeug zum Zwecke des Spanabhebens drehangetrieben.

Es ist eine Vorteil der Erfindung, dass das Bearbeiten im tauchenden Verfahren und das Korrekturbearbeiten ohne Umspannen des Kegelradwerkstück und ohne Werkzeugwechsel erfolgt. Daher ist das Verfahren der Erfindung besonders zuverlässig und sehr genau.

Ausführungsbeispiele der Erfindung werden im Folgenden unter Bezugnahme auf die Zeichnungen näher beschrieben.
- **FIG. 1A**: zeigt eine schematische Seitenansicht des Bearbeitungsbereichs einer Verzahnmaschine beim Verzahnungsfräsen im Tauchverfahren gemäß Stand der Technik, wobei ein Messerkopfwerkzeug leicht schräg zum Tellerrad gezeigt ist;
- **FIG. 18**: zeigt eine schematische Seitenansicht des Messerkopfwerkzeugs und des Tellerrads der Fig. 1A, nachdem eine Eintauchbewegung ausgeführt wurde;
- **FIG. 1C**: zeigt eine stark vereinfachte, schematisierte Darstellung eines Tauchverfahrens des Standes der Technik;

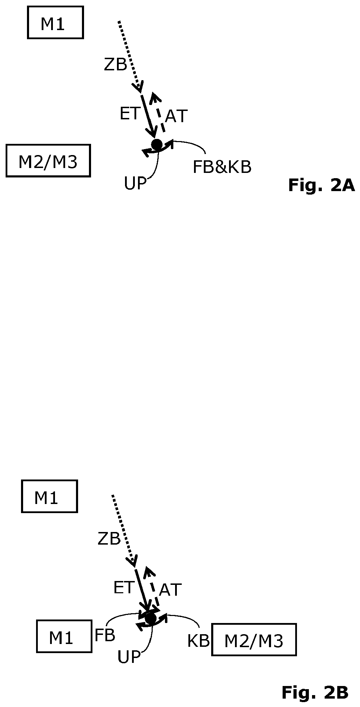

- **FIG. 2A**: zeigt eine stark vereinfachte, schematisierte Darstellung eines ersten modifizierten Tauchverfahrens der Erfindung;
- **FIG. 2B**: zeigt eine stark vereinfachte, schematisierte Darstellung eines zweiten modifizierten Tauchverfahrens der Erfindung;

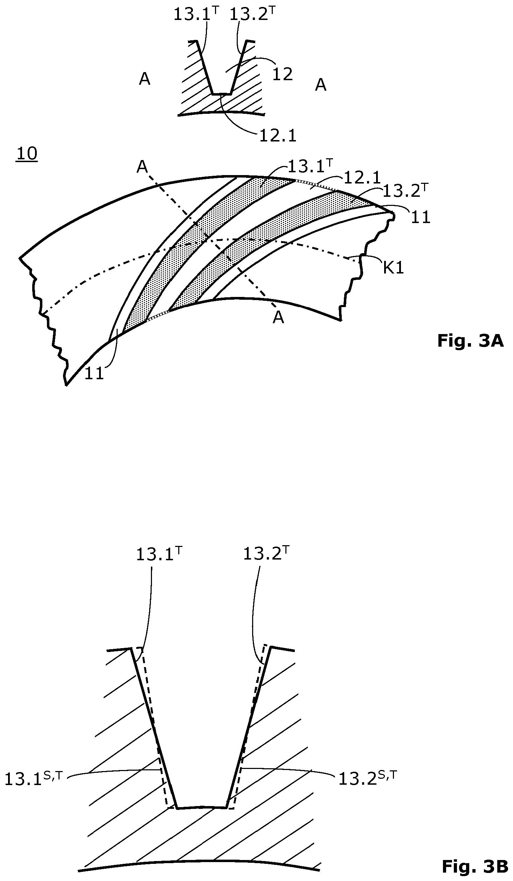

- **FIG. 3A**: zeigt im unteren Bereich eine schematische Draufsicht eines Tellerradwerkstücks und oberhalb eine schematisierte Schnittdarstellung entlang der Normalenlinie A-A durch eine Zahnlücke, die durch Tauchen im Einzelteilverfahren vorbearbeitet wurde;
- **FIG. 3B**: zeigt die schematische Schnittdarstellung der Fig. 3A in einer vergrösserten Form, wobei zusätzlich zum Ist-Verlauf der Flankenlinien nach dem Tauchen auch der Sollverlauf der Flankenlinien gezeigt ist;

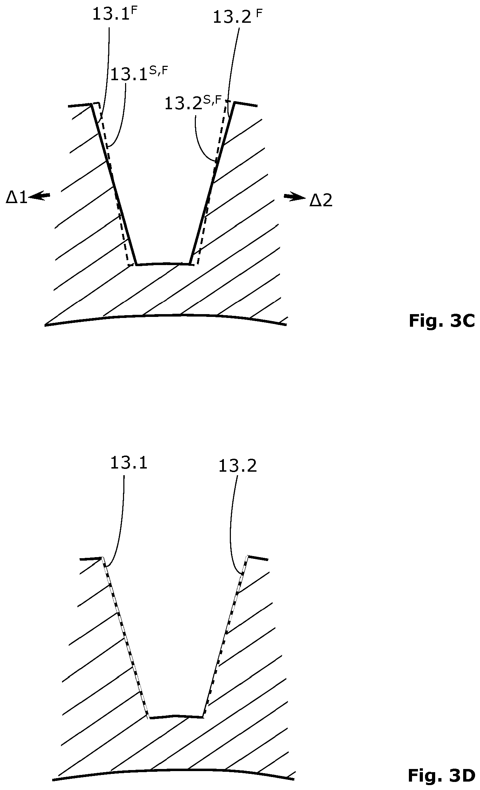

- **FIG. 3C**: zeigt die schematische Schnittdarstellung der Fig. 3B, wobei zusätzlich zum Sollverlauf der Flankenlinien der Ist-Verlauf der Flankenlinien nach dem Freischneiden gezeigt sind;
- **FIG. 3D**: zeigt die schematische Schnittdarstellung der Fig. 3C, wobei endgültige Verlauf der Flankenlinien gezeigt sind.

Im Rahmen der vorliegenden Erfindung können verschiedenste Verzahnwerkzeuge (z.B. Vollwerkzeuge) mit definierten Schneiden und Schleifwerkzeuge (z.B. Topfschleifscheiben) eingesetzt werden. Im Zusammenhang mit der folgenden Beschreibung werden Details von Ausführungsformen beschrieben, bei denen Messerkopf-Verzahnwerkzeuge zum Einsatz kommen, die Stabmesser oder Messereinsätze umfassen. Ein Stabmesser oder Messereinsatz kann z.B. zwei Schneiden aufweisen, wobei je eine dieser Schneiden für das Bearbeiten der konkaven Zahnflanke 13.1 einer Zahnlücke 12 und die andere dieser Schneiden für das Bearbeiten der konvexen Zahnflanke 13.2 der Zahnlücke 12 ausgelegt ist. Die Verzahnwerkzeuge können bei allen Ausführungsformen aber auch gruppenweise angeordnete Stabmesser oder Messereinsätze umfassen, bei denen ein Teil der Stabmesser oder Messereinsätze Schneiden zum Bearbeiten konkaven Zahnflanke 13.1 und ein anderer Teil der Stabmesser oder Messereinsätze Schneiden zum Bearbeiten konvexen Zahnflanke 13.2 aufweist.

Das Beschriebene lässt sich jedoch auch auf andere Werkzeuge übertragen, die zum Verzahnen von Kegelradwerkstücken 10 ausgelegt sind.

Derartige Werkzeuge und die entsprechenden Verzahnungsmaschinen sind hinlänglich bekannt und werden seit vielen Jahren in der Verzahnungsbranche eingesetzt.

In Fig. 2A sind nun die Details eines ersten Verfahrens der Erfindung in rein schematischer Form zusammenfassend dargestellt. Dieses erste Verfahren wird hier auch als erstes modifiziertes Tauchverfahren bezeichnet.

Das Verfahren der Erfindung basiert bei allen Ausführungsformen auf einem klassischen Tauchverfahren, das bereits im Zusammenhang mit den Figuren 1A bis 1C beschrieben wurde.

Der punktierte Pfeil symbolisiert in Fig. 2A die Zustellbewegung ZB und der durchgezogene Pfeil, der in Richtung des Tellerradwerkstücks 1 (hier nicht gezeigt) gerichtet ist, symbolisiert die Eintauchbewegung ET des ersten modifizierten Tauchverfahrens.

Nachdem das Werkzeug die endgültige Tauchposition erreicht hat, die durch die Position des Zahnfusses am Tellerradwerkstück 10 definiert ist, folgt gemäß Erfindung ein Verfahren, das hier als kombinierte Korrekturbearbeitung FB&KB bezeichnet wird. In Fig. 2A ist angedeutet, dass die kombinierte Korrekturbearbeitung FB&KB sowohl ein Freischneiden FB, das beim Erreichen oder nach dem Erreichen der Tauchendposition ausgeführt wird, als auch eine Korrekturbearbeitung KB umfasst, die durch das Ändern/Verstellen weiterer Größen der Maschineneinstellung erfolgt.

Der Doppelpfeil FB&KB hat in Fig. 2A eine leichte Krümmung, um zu symbolisieren, dass ein Verstellen der Maschineneinstellung erfolgt. Der Krümmungsradius dieses Doppelpfeils FB&KB ist in Richtung des Werkzeugs (nicht gezeigt) orientiert, um so das Verstellen der Maschineneinstellung darzustellen. Das Verstellen der Maschineneinstellung ist auch dadurch symbolisiert, dass neben dem Doppelpfeil FB&KB die beiden Maschineneinstellungen M2 und M3 genannt sind.

Die Lückenweite ist nach der kombinierten Korrekturbearbeitung FB&KB größer als die Spitzenweite sₐ₀ des Werkzeugs. Die Spitzenweite sₐ₀ ist in Fig. 1B als Abstand zwischen den beiden Schneiden des Stabmessers 3 gezeigt.

Erst nachdem diese kombinierte Korrekturbearbeitung FB&KB durch das Verstellen der Maschineneinstellungen erfolgt ist, wird das Werkzeug durch eine rückwärts gerichtete Bewegung AT aus der Zahnlücke gezogen. Auch hier gibt es daher eine Art Umkehrpunkt UP.

Bis zum Ausführen der rückwärts gerichteten Bewegung AT kann bei allen Ausführungsformen der Erfindung das Werkzeug optional eine kurze Zeit in der Endposition verbleiben, damit mehr als nur ein Stabmesser oder Messereinsatz spanabhebend durch die Zahnlücke geführt wird.

In Fig. 2B sind die Details eines zweiten Verfahrens der Erfindung in schematischer Form zusammenfassend dargestellt. Da dieses Verfahren in Bezug auf das Zustellen ZB, Tauchen ET und Austauchen AT dem ersten Verfahren gleicht, wird insofern auf die Beschreibung der Fig. 2A verwiesen.

Anders als in Fig. 2A, werden in Fig. 2B durch einen separaten Doppelpfeil FB die klassischen Freischneidbewegungen symbolisiert. Das Freischneiden wird dadurch erreicht, dass das Tellerradwerkstück 10 eine kleine Werkstückdrehung um die Werkstückrotationsachse R2 in eine Drehrichtung (z.B. in Richtung des Uhrzeigersinns) und in die entgegengesetzte Drehrichtung (z.B. gegen den Uhrzeigersinn) ausführt. Der Doppelpfeil FB hat daher in Fig. 2 eine leichte Krümmung, um zu symbolisieren, dass es sich um ein Werkstückdrehung um die Werkstückrotationsachse R2 handelt.

Gemäß Erfindung wird die Werkstückdrehung mit vorgegebenem Betrag in eine oder in beide Drehrichtungen ausgeführt. Dadurch erhält die Zahnlücke 12 eine vergrösserte Lückenweite. Die Lückenweite ist hier unmittelbar nach dem klassischen Freischneiden größer als die Spitzenweite sₐ₀ des Werkzeugs.

Beim zweiten Verfahren erfolgt das Freischneiden beim Erreichen oder nach dem Erreichen der Tauchendposition unter Beibehaltung der ersten Maschineneinstellung M1. Lediglich das Tellerradwerkstück 10 vollzieht beim klassischen Freischneiden eine Werkstückdrehung. Daher ist in Fig. 2B das Symbol M1 unmittelbar neben dem Bezugszeichen FB gezeigt.

Gemäß Erfindung folgt nun das Durchführen einer Korrekturbearbeitung KB, wie in Fig. 2A in rein schematischer Form durch den separaten Doppelpfeil KB dargestellt. Der Doppelpfeil KB hat in Fig. 2B eine leichte Krümmung, um zu symbolisieren, dass die Korrekturbearbeitung KB durch das Verstellen der Maschineneinstellung(en) erfolgt. Der Krümmungsradius dieses Doppelpfeils KB ist in Richtung des Werkzeugs (nicht gezeigt) orientiert, um so das Verstellen der Maschineneinstellung(en) darzustellen.

Durch diese Art der Korrekturbearbeitung KB, die erfolgt während sich das Werkzeug in der Zahnlücke des Tellerradwerkstücks 10 befindet, kann z.B. ein Flankenwinkelfehler oder auch andere Fehler der Zahnflanken der Zahnlücke gezielt korrigiert werden. Das Verstellen der Maschineneinstellung ist in Fig. 2B dadurch angedeutet, dass neben dem Bezugszeichen KB eine zweite Maschineneinstellung M2 und eine dritte Maschineneinstellung M3 genannt sind.

Erst nachdem diese Korrekturbearbeitung KB durch das Verstellen der Maschineneinstellungen erfolgt ist, wird das Werkzeug durch eine rückwärts gerichtete Bewegung AT aus der Zahnlücke gezogen. Auch hier gibt es daher eine Art Umkehrpunkt UP.

Sowohl beim einzelteilend als auch beim kontinuierlich teilend ausgeführten Tauchverfahren angewendet wird, erfolgt gemäß Erfindung die Werkstückdrehung, die zum Freischneiden dient, mit einem Winkelbetrag, der deutlich kleiner ist als die Teilung p des zu bearbeitenden Tellerradwerkstücks 10. Anders als beim Einzelteil-Tauchverfahren, dreht sich beim kontinuierlich teilenden Tauchverfahren das Tellerradwerkstück 10 synchronisiert (gekoppelt) in einem bestimmten Verhältnis zur Werkzeugdrehzahl (abhängig von der Zähnezahl und der Messerkopfgangzahl). Dieser synchronisierten Bewegung wird bei der Werkstückdrehung eine Phasenverschiebung des Drehwinkels des Werkstücks überlagert. Diese Phasenverdrehung ist ebenfalls deutlich kleiner als die Teilung p.

Die im Folgenden angegebenen Werte beziehen sich jeweils auf das Planrad, das zur Auslegung des Tellerrads 10 herangezogen wurde. Daher sind alle Formelzeichen mit einem tiefgestellten P versehen.

Fig. 3A zeigt eine schematische Draufsicht eines Abschnitts eines Tellerradwerkstücks 10, an dem eine Zahnlücke 12 durch konventionelles Tauchen im Einzelteilverfahren vorbearbeitet wurde. Von links nach rechts betrachtet, umfasst die Darstellung des Tellerradwerkstücks 10 einen Zahn 11 (um genau zu sein handelt es sich um den Zahnkopf), eine konkave Zahnflanke 13.1, einen Zahnlückengrund mit Zahnfuß 12.1, eine konvexe Zahnflanke 13.2 und einen weiteren Zahn 11. Die beiden Zahnflanken 13.1, 13.2 sind mit einem grauen Muster versehen, um anzudeuten, dass diese Flanken noch nicht die endgültige Form aufweisen (der Ist-Verlauf, respektive die Ist-Topografie weicht vom Soll-Verlauf, respektive der Soll-Topografie ab). Sie können z.B. einen gleichsinnigen Flankenwinkelfehler aufweisen, wie bereits eingangs erwähnt. Um anzudeuten, dass es sich um die Zahnflanken nach dem Tauchen handelt, sind die Bezugszeichen 13.1 und 13.2 jeweils mit einem hochgestellten T versehen. Es handelt sich somit um die Zahnflanken 13.1^{T}, 13.2^{T} nach dem Tauchen.

Oberhalb ist in Fig. 3A ein Normalschnitt durch eine Zahnlücke 12 in stark schematisierter Form gezeigt, die durch Tauchen im Einzelteilverfahren vorbearbeitet wurde. Der Schnitt verläuft entlang der Schnittlinie A-A.

In Fig. 3B ist die Schnittdarstellung der Fig. 3A in vergrösserter Form gezeigt. Zusätzlich zum momentanen Ist-Verlauf der getauchten Zahnflanken 13.1^{T}, 13.2^{T} (auch Ist-Zahnflanken genannt) ist der Sollverlauf 13.1^{S,T}, 13.2^{S,T} (auch Soll-Zahnflanken nach dem Tauchen genannt) der beiden Flanken durch strichlierte Linien dargestellt. Im gezeigten Fall weisen die Ist-Zahnflanken 13.1^{T}, 13.2^{T} gegenüber den Soll-Zahnflanken 13.1^{S,T}, 13.2^{S,T} einen gleichsinnig positiven Flankenwinkelfehler FWF auf.

Der Flankenwinkelfehler FWF ist nach dem Tauchen als Differenz zwischen dem Sollverlauf 13.1^{S,T}, 13.2^{S,T} und dem Ist-Verlauf der Zahnflanken 13.1^{T}, 13.2^{T} definiert. Ein positiver Flankenwinkelfehler FWF ist hier ein Winkelfehler, bei dem die strichlierte Linie, die dazu dient den Sollverlauf 13.1^{S,T}, 13.2^{S,T} in Richtung der Zahnhöhe darzustellen, eine steilere Steigung hat als der Ist-Verlauf der Zahnflanken 13.1^{T}, 13.2^{T}.

In Fig. 3C ist nun der Zustand nach dem Freischneiden durch eine Werkstückdrehung um den Winkelbetrag |Δ1| in eine erste Drehrichtung und um den Winkelbetrag |Δ2| in die entgegengesetzte, zweite Drehrichtung gezeigt. Da dieses konventionelle Freischneiden mit demselben Verzahnungswerkzeug erfolgt und da lediglich eine Werkstückdrehung des Kegelradwerkstücks 10 vorgenommen wird, bleibt der Flankenwinkelfehler FWF erhalten. Durch das Freischneiden wird lediglich die Lückenweite e der Zahnlücke 12 um einen kleinen Betrag vergrössert. Der momentane Ist-Verlauf der Zahnflanken ist durch einen hochgestellten Buchstaben F, wie folgt gekennzeichnet 13.1^{F}, 13.2^{F}. Der Sollverlauf 13.1^{S,F}, 13.2^{S,F} der beiden Flanken nach dem Freischneiden ist durch strichlierte Linien dargestellt.

Die beiden kurzen, mit Δ1 und Δ2 bezeichneten Pfeilspitzen, die in Richtung des Uhrzeigersinns und entgegen des Uhrzeigersinns weisen, symbolisieren die beiden Werkstückdrehungen. Vorzugsweise ist bei allen Ausführungsformen der Winkelbetrag der Werkstückdrehung in beide Drehrichtungen gleich, d.h. |Δ1| = |Δ2|. Die Lückenweite e ist durch das Freischneiden minimal erweitert worden, was im Vergleich der Figuren 3B und 3C kaum sichtbar ist..

Nun erfolgt das Korrekturbearbeiten durch Verändern der Maschineneinstellungen. Das Resultat nach diesem Korrekturbearbeiten ist in Fig. 3D durch die Flankenlinien 13.1, 13.2 gezeigt. Um anzudeuten, dass der Flankenwinkelfehler FWF im Idealfall gleich Null ist, oder nahezu Null beträgt, sind in Fig. 3D Flankenlinien 13.1, 13.2 in Form unterbrochener Geraden gezeigt.

Es ist zu beachten, dass die Figuren 3A bis 3D rein schematischer Natur sind und dass gewisse Aspekte nicht massstäblich dargestellt wurden, um diese überhaupt sichtbar zu machen. Auch sind die Zahnform und der Verlauf des Zahnfusses 12.1 idealisiert dargestellt.

Bei dem hier behandelten Flankenwinkelfehler FWF handelt es sich um einen Fehler, der Punkt für Punkt auf jeder Zahnflanke 13.1, 13.2 durch Messung bestimmt werden muss. Da es sich um Flankenwinkelfehler FWF handelt, die durch das Tauchen mit der ersten Maschineneinstellung M1 hervorgerufen werden, ist der Flankenwinkelfehler FWF entlang jeder der Zahnflanke 13.1 und 13.2 in Flankenlängsrichtung konstant.

Die Darstellung der Figuren 3A bis 3D kann sofern auch auf andere Positionen entlang der Zahnflanken 13.1, 13.2 übertragen werden, da der Flankenwinkelfehler FWF, wie soeben erwähnt, konstant ist.

Es handelt sich bei den Flankenwinkelfehlern FWF, die gemäß Erfindung behoben werden können, um Flankenwinkelfehler FWF, die jeweils in Höhenrichtung der Zähne 11 gemessen werden.

Die Darstellung der Figuren 3A bis 3D basiert auf dem zweiten Verfahrensansatz der Erfindung, bei dem das Freischneiden FB separat vom Korrekturbearbeiten KB erfolgt, wie in Fig. 2B gezeigt.

Die Darstellung von drei Schritten in den Figuren 3B, 3C und 3D wurde jedoch nur gewählt, weil es diese Form der Darstellung ermöglicht die Teilaspekte besser zu illustrieren und zu beschreiben und da diese Form der Darstellung einfacher und anschaulicher ist als eine überlagerte Darstellung von ineinandergreifenden Schritten.

Bevorzugt wird, wie eingangs beschrieben, das erste modifizierte Tauchverfahren, bei dem das Freischneiden und das Korrekturbearbeiten gemeinsam erfolgt, wie in Fig. 2A illustriert.

Das hier Beschriebene lässt sich nicht nur auf Einzelteilverfahren anwenden, bei denen Zahnlücke 12 für Zahnlücke 12 so bearbeitet wird wie in Fig. 2A oder 2B gezeigt, sondern es lässt sich auch auf kontinuierliche Teilverfahren anwenden, bei denen jeweils alle Lücken demselben Tauchschritt gefolgt vom Korrekturbearbeitungsverfahren unterzogen werden.

Das Verstellen der Maschineneinstellung bezieht sich hier bei allen Ausführungsformen auf das Verstellen mindestens einer Größe zusätzlich zur Werkstückverdrehung Δ.

Bei einem vereinfachten Sonderfall kann man z.B. zusätzlich zur Werkstückverdrehung Δ den Wiegenwinkel α in eine erste Richtung ändern (hier zweite Maschineneinstellung M2 genannt), um eine konkave Zahnflanke 13.1^{T} (beim Einzelteilverfahren) oder alle konkaven Zahnflanken 13.1^{T} (beim kontinuierlichen Teilverfahren) zu korrigieren. Zur Korrekturbearbeitung einer konvexen Zahnflanke 13.2^{T} (beim Einzelteilverfahren) oder aller konvexen Zahnflanken 13.2^{T} (beim kontinuierlichen Teilverfahren) wird dann der Wiegenwinkel α in eine entgegengesetzte Richtung geändert.

Anhand dieses vereinfachten Sonderfalls wird nochmals der Unterschied der drei unterschiedlichen Maschineneinstellungen M1, M2, M3 zusammengefasst. Bei der ersten Maschineneinstellung M1 beträgt der Wiegenwinkel α = α1 und es wird beim Tauchen lediglich die Tiefenposition χ von z.B. einer Ausgangstiefenposition χ0 zu χ1 verändert. Der Betrag dieser Veränderung ist in Fig. 1B mit ET bezeichnet.

Die zweite Maschineneinstellung M2 unterscheidet sich beim vereinfachten Sonderfall von der ersten Maschineneinstellung M1 z.B. durch einen anderen Wiegenwinkel α2 ≠ α1 und durch eine Werkstückverdrehung -Δ. Die Tiefenposition χ bleibt z.B. unverändert, d.h. χ2 = χ1.

Die dritte Maschineneinstellung M3 unterscheidet sich beim vereinfachten Sonderfall von der ersten und zweiten Maschineneinstellung M1, M2 z.B. durch einen anderen Wiegenwinkel α3 ≠ α2 ≠ α1 und durch eine Werkstückverdrehung +Δ. Die Tiefenposition χ bleibt z.B. unverändert, d.h. χ3 = χ1= χ2.

Vorzugsweise erfolgt das Überführen des Messerkopf-Verzahnungswerkzeugs aus der ersten Maschineneinstellung M1 in die zweite Maschineneinstellung M2 bei allen Ausführungsformen während sich die Schneiden des Messerkopf-Verzahnungswerkzeugs in der Zahnlücke 12 befinden. Analog kann auch das Überführen eines Schleifwerkzeugs aus der ersten Maschineneinstellung M1 in die zweite Maschineneinstellung M2 erfolgen, während sich die abrasiven Oberflächen des Schleifwerkzeugs in der Zahnlücke 12 befinden.

Es ist dem Verzahnungsfachmann hinlänglich bekannt, dass das Verändern oder Verstellen einer einzigen Größe der Maschineneinstellung des Verzahnungsmodells bei einer realen Verzahnungsmaschine auf das Verstellen von zwei oder mehr als zwei Grössen hinauslaufen kann. Das liegt unter anderem daran, dass es sich um relative Verstellungen handelt, die oft schneller ausgeführt werden können, wenn man z.B. das Kegelradwerkstück 10 und das Verzahnwerkzeug bewegt. Ausserdem bildet nicht jeder der verfügbaren Maschinen 1:1 die Achsen des Verzahnungsmodells nach, sondern die Achskonstellationen können zum Teil recht unterschiedlich sein.

Gemäß Erfindung kann das Kegelradwerkstück 10 nach dem Tauchen und vor dem Durchführen der Korrekturbearbeitung einer Messung unterzogen werden, um Flankenwinkelfehler FWF erkennen und deren Grösse ermitteln zu können.

Gemäß Erfindung kann aber auch ein Kegelradwerkstück 10 einer Serie von Kegelradwerkstücken nach dem spanabhebenden Bearbeiten im tauchenden Verfahren einer Messung unterzogen werden, um dann anschliessend bei weiteren Kegelradwerkstücken der Serie von Kegelradwerkstücken die Korrekturbearbeitung auszuführen.

### Bezugszeichen:

| | |
|---|---|
| Tellerradwerkstück | 1 |
| Verzahnunqswerkzeuq/ Messerkopfwerkzeug | 2 |
| Stabmesser | 3 |
| Kegelradwerkstück/Tellerradwerkstück | 10 |
| Zähne | 11 |
| Zahnlücken | 12 |
| Zahnqrund/Zahnfuß | 12.1 |
| Konkave Flanke | 13.1 |
| Konkave Flanke nach dem Tauchen | 13.1^{T} |
| Konkave Flanke nach dem Freischneiden | 13.1^{F} |
| Konvexe Flanke | 13.2 |
| Konvexe Flanke nach dem Tauchen | 13.2^{T} |
| Konvexe Flanke nach dem Freischneiden | 13.2^{F} |
| Sollverlauf der Flankenlinie der konkaven Flanke nach dem Tauchen | 13.1^{S,T} |
| Sollverlauf der Flankenlinie der konkaven Flanke nach dem Freischneiden | 13.1^{S,F} |
| Sollverlauf der Flankenlinie der konvexen Flanke nach dem Tauchen | 13.2^{S,T} |
| Sollverlauf der Flankenlinie der konvexen Flanke nach dem Freischneiden | 13.2^{S,F} |
| | |
| Schnittlinie | A-A |
| Austauchbewequnq | AT |
| Wieqenwinkel | α |
| erster Wieqenwinkel | α1 |
| zweiter Wiegenwinkel | α2 |
| dritter Wieqenwinkel | α3 |
| Werkstückdrehunq | Δ |
| Winkelbetrag der Werkstückdrehunq | \|Δ\| |
| Lückenweite des Tellerrads | e |
| Eintauchbewegung | ET |
| Freischneidbewequnq | FB |
| Flankenwinkelfehler | FWF |
| kombinierte Korrekturbearbeitunq | FB&KB |
| Achsversatz | η |
| Maschinenqrundwinkel | γ |
| Kreisboqen | K1 |
| Maschineneinstellungen | M1, M2, M3 |
| Abstand | mccp |
| Werkzeugrotationsachse/ Werkzeugspindelachse | R1 |
| Werkstückrotationsachse/Werkstückspindelachse | R2 |
| Radialdistanz | ϕ |
| Spitzenweite | Sa0 |
| Orientierungswinkel (swivel) | σ |
| Neiqunqs (tilt) | τ |
| Umkehrpunkt | UP |
| Tiefenposition | X |
| Ausqanqstiefenposition | X0 |
| erste Tiefenposition | X1 |
| zweite Tiefenposition | X2 |
| dritte Tiefenposition | X3 |
| Zustellbewequnq | ZB |

## Patentansprüche

1. Verfahren zum Bearbeiten der Zahnflanken (13.1, 13.2) eines getauchten Kegelradwerkstücks (10), insbesondere eines Tellerradwerkstücks (10), mit den folgenden Teilschritten
- Drehantreiben eines Verzahnungswerkzeugs sowie spanabhebendes Bearbeiten im tauchenden Verfahren, bei dem das Verzahnungswerkzeug mit einer ersten Maschineneinstellung (M1) bis zu einer vorgegebenen Tiefe in Material des Kegelradwerkstücks (10) eingetaucht wird, um eine konkave Zahnflanke (13.1) und eine konvexe Zahnflanke (13.2) mindestens einer Zahnlücke (12) des Kegelradwerkstücks (10) zu bearbeiten, **gekennzeichnet durch** ein
- Durchführen einer Korrekturbearbeitung (KB) der konkaven Zahnflanke (13.1) und der konvexen Zahnflanke (13.2) mindestens der einen Zahnlücke (12) durch
∘ Freischneiden der konkaven Zahnflanke (13.1) indem das Kegelradwerkstück (10) relativ zum Verzahnungswerkzeug eine Werkstückdrehung (Δ1) in eine erste Drehrichtung mit einem vorgegebenem ersten Betrag (|Δ1|) ausführt und/oder Freischneiden der konvexen Zahnflanke (13.2) indem das Kegelradwerkstück (10) relativ zum Verzahnungswerkzeug eine Werkstückdrehung (Δ2) in eine andere Drehrichtung mit einem vorgegebenem zweiten Betrag (|Δ2|) ausführt, um der Zahnlücke (12) eine vergrösserte Lückenweite (e) zu geben, und
∘ Nachbearbeiten der konkaven Zahnflanke (13.1) mit einer zweiten Maschineneinstellung (M2), die sich von der ersten Maschineneinstellung (M1) unterscheidet, und
∘ Nachbearbeiten der konvexen Zahnflanke (13.2) mit einer dritten Maschineneinstellung (M3), die sich von der beim Tauchen verwendeten ersten Maschineneinstellung (M1) und von der zweiten Maschineneinstellung (M2) unterscheidet.

2. Verfahren nach Anspruch 1, **dadurch gekennzeichnet, dass** das Freischneiden der konkaven Zahnflanke (13.1) und das Nachbearbeiten der konkaven Zahnflanke (13.1) zeitgleich mit der zweiten Maschineneinstellung (M2) erfolgt.

3. Verfahren nach Anspruch 1 oder 2, **dadurch gekennzeichnet, dass** das Freischneiden der konvexen Zahnflanke (13.2) und das Nachbearbeiten der konvexen Zahnflanke (13.2) zeitgleich mit der dritten Maschineneinstellung (M3) erfolgt.

4. Verfahren nach Anspruch 1, 2 oder 3, **dadurch gekennzeichnet, dass** das Überführen des Verzahnungswerkzeugs aus der ersten Maschineneinstellung (M1) in die zweite Maschineneinstellung (M2) vorgenommen wird, während sich das Messerkopf-Verzahnungswerkzeug teilweise in der Zahnlücke (12) befindet.

5. Verfahren nach Anspruch 1, 2, 3 oder 4, **dadurch gekennzeichnet, dass** das Freischneiden der konkaven Zahnflanke (13.1) und das Freischneiden der konvexen Zahnflanke (13.2) ausgeführt wird, wobei der vorgegebene ersten Betrag (|Δ1|) mit dem vorgegebenem zweiten Betrag (|Δ2|) identisch ist.

6. Verfahren nach einem der Ansprüche 1 bis 5, **dadurch gekennzeichnet, dass** das Verzahnungswerkzeug ein Messerkopf-Verzahnungswerkzeug ist, das mit Stabmessern oder Messereinsätzen bestückt ist, wobei jedes der Stabmesser bzw. jeder der Messereinsätze zwei Schneiden (12) aufweist, um beim spanabhebenden Bearbeiten im tauchenden Verfahren gleichzeitig die konkave Zahnflanke (13.1) und die konvexe Zahnflanke (13.2) bearbeiten zu können.

7. Verfahren nach einem der Ansprüche 1 bis 5, **dadurch gekennzeichnet, dass** das Verzahnungswerkzeug ein Messerkopf-Verzahnungswerkzeug ist, das mit Stabmessern oder Messereinsätzen bestückt ist, wobei jeweils ein Teil der Stabmesser bzw. ein Teil der Messereinsätze je eine Schneide (12) aufweist, um beim spanabhebenden Bearbeiten im tauchenden Verfahren die konkaven Zahnflanke (13.1) zu bearbeiten, und wobei jeweils ein anderer Teil der Stabmesser bzw. ein anderer Teil der Messereinsätze je eine Schneide (12) aufweist, um beim spanabhebenden Bearbeiten im tauchenden Verfahren die konvexe Zahnflanke (13.2) zu bearbeiten.

8. Verfahren nach einem der Ansprüche 1 bis 7, **dadurch gekennzeichnet, dass** die Korrekturbearbeitung ausgeführt wird, um gleichsinnige Flankenwinkelfehler (FWF) zu korrigieren, die im Rahmen des Bearbeitens im tauchenden Verfahren aufgetreten sind.

9. Verfahren nach einem der Ansprüche 1 bis 7, **dadurch gekennzeichnet, dass** das Kegelradwerkstück (10) vor dem Durchführen der Korrekturbearbeitung einer Messung unterzogen wird, um Flankenwinkelfehler (FWF) erkennen zu können.

10. Verfahren nach einem der Ansprüche 1 bis 7, **dadurch gekennzeichnet, dass** ein Kegelradwerkstück (10) einer Serie von Kegelradwerkstücken nach dem spanabhebenden Bearbeiten im tauchenden Verfahren einer Messung unterzogen wird, um dann anschliessend bei weiteren Kegelradwerkstücken der Serie von Kegelradwerkstücken die Korrekturbearbeitung auszuführen.

11. Verfahren nach einem der Ansprüche 1 bis 10, **dadurch gekennzeichnet, dass** es sich um ein Einzelteilverfahren oder um ein kontinuierliches Teilverfahren handelt, wobei beim kontinuierlichen Teilverfahren zusätzlich zum Drehantreiben des Verzahnungswerkzeugs das Kegelradwerkstück (10) gekoppelt drehangetrieben wird.

## Claims

1. A method for machining the tooth flanks (13.1, 13.2) of a plunge-machined bevel gear workpiece (10), in particular a crown gear workpiece (10), comprising the following partial steps
- rotationally driving a gear-cutting tool (100) and chip-removing machining in the plunging method, in which the gear-cutting tool (100) is plunged with a first machine setting (M1) up to a predefined depth into the material of the bevel gear workpiece (10) to machine a concave tooth flank (13.1) and a convex tooth flank (13.2) of at least one tooth gap (12) of the bevel gear workpiece (10), and **characterized in**
- carrying out a correction machining (KB) of the concave tooth flank (13.1) and the convex tooth flank (13.2) of at least one tooth gap (12) of the plunged-machined bevel gear workpiece by
∘ cutting free of the concave tooth flank (13.1) by the bevel gear workpiece (10) executing a workpiece rotation (Δ1) in a first rotational direction having a predefined first absolute value (|Δ1|) in relation to the gear-cutting tool (100) and/or cutting free of the convex tooth flank (13.2) by the bevel gear workpiece (10) executing a workpiece rotation (Δ2) in another rotational direction having a predefined second absolute value (|Δ2|) in relation to the gear-cutting tool (100) to give the tooth gap (12) an enlarged gap width (e), and
∘ finish machining of the concave tooth flank (13.1) with a second machine setting (M2), which differs from the first machine setting (M1) used during the plunging, and
∘ finish machining of the convex tooth flank (13.2) with a third machine setting (M3), which differs from the first machine setting (M2) and from the second machine setting (M2) used during the plunging.

2. The method according to claim 1, **characterized in that** the cutting free of the concave tooth flank (13.1) and the finish machining of the concave tooth flank (13.1) take place simultaneously using the second machine setting (M2).

3. The method according to claim 1 or 2, **characterized in that** the cutting free of the convex tooth flank (13.2) and the finish machining of the convex tooth flank (13.2) take place simultaneously using the third machine setting (M3).

4. The method according to claim 1, 2, or 3, **characterized in that** the transition of the gear-cutting tool (100) from the first machine setting (M1) into the second machine setting (M2) is performed while the cutter head gear-cutting tool (100) is partially located in the tooth gap (12).

5. The method according to claim 1, 2, 3, or 4, **characterized in that** the cutting free of the concave tooth flank (13.1) and the cutting free of the convex tooth flank (13.2) are executed, wherein the predefined first absolute value (|Δ1|) is identical to the predefined second absolute value (|Δ2|).

6. The method according to any one of claims 1 to 5, **characterized in that** the gear-cutting tool (100) is a cutter head gear-cutting tool, which is equipped with bar cutters or cutter inserts, wherein each of the bar cutters or each of the cutter inserts, respectively, has two cutting edges (12), to be able to machine the concave tooth flank (13.1) and the convex tooth flank (13.2) simultaneously during the chip-removing machining in the plunging method.

7. The method according to any one of claims 1 to 5, **characterized in that** the gear-cutting tool (100) is a cutter head gear-cutting tool, which is equipped with bar cutters or cutter inserts, wherein a part of the bar cutters or a part of the cutter inserts, respectively, each have a cutting edge (12), to machine the concave tooth flank (13.1) during the chip-removing machining in the plunging method, and wherein another part of the bar cutters or another part of the cutter inserts, respectively, each have a cutting edge (12), to machine the convex tooth flank (13.2) during the chip-removing machining in the plunging method.

8. The method according to any one of claims 1 to 7, **characterized in that** the correction machining is executed to correct flank angle errors (FWF) oriented in the same direction, which have occurred in the course of the machining in the plunging method.

9. The method according to any one of claims 1 to 7, **characterized in that** the bevel gear workpiece (10) is subjected to a measurement before carrying out the correction machining, to be able to recognize flank angle errors (FWF).

10. The method according to any one of claims 1 to 7, **characterized in that** one bevel gear workpiece (10) of a series of bevel gear workpieces is subjected to a measurement after the chip-removing machining in the plunging method, to then subsequently execute the correction machining in further bevel gear workpieces of the series of bevel gear workpieces.

11. The method according to any one of claims 1 to 10, **characterized in that** it is a single-indexing method or a continuous-indexing method, wherein in the case of the continuous-indexing method, in addition to the rotational driving of the gear-cutting tool (100), the bevel gear workpiece (10) is rotationally driven in a coupled manner.

## Revendications

1. Procédé d'usinage des flancs de dents (13.1, 13.2) d'une pièce d'engrenage conique (10) usinée en plongée, en particulier d'une pièce d'engrenage à couronne (10), comprenant les étapes partielles suivantes
- l'entraînement en rotation d'un outil de taillage d'engrenages (100) et l'usinage par enlèvement de copeaux selon la méthode de plongée, dans laquelle l'outil de taillage d'engrenages (100) est plongé avec un premier réglage de la machine (M1) jusqu'à une profondeur prédéfinie dans le matériau de la pièce à engrenages coniques (10) pour usiner un flanc de dent concave (13.1) et un flanc de dent convexe (13.2) d'au moins un entredent (12) de la pièce à engrenages coniques (10), et caractérisé en ce qui suit
- effectuer un usinage de correction (KB) du flanc de dent concave (13.1) et du flanc de dent convexe (13.2) d'au moins un entredent (12) de la pièce d'engrenage conique usinée par plongée en
∘ Découpage du flanc de dent concave (13.1) par la pièce à engrenage conique (10) exécutant une rotation de pièce (Δ1) dans une première direction de rotation ayant une première valeur absolue prédéfinie (|Δ1|) par rapport à l'outil de taillage d'engrenages (100) et/ou découpage du flanc de dent convexe (13.2) par la pièce à engrenage conique (10) exécutant une rotation de la pièce (Δ2) dans un autre sens de rotation ayant une seconde valeur absolue prédéfinie (|Δ2| ) par rapport à l'outil de taillage d'engrenages (100) pour donner à l'entre-dents (12) une largeur d'entre-dents élargie (e), et
∘ terminer l'usinage du flanc de la dent concave (13.1) avec un deuxième réglage de la machine (M2), qui diffère du premier réglage de la machine (M1) utilisé pendant la plongée, et
∘ finition de l'usinage du flanc convexe de la dent (13.2) avec un troisième réglage de la machine (M3), qui diffère du premier réglage de la machine (M2) et du deuxième réglage de la machine (M2) utilisé lors de la plongée.

2. Procédé selon la revendication 1, **caractérisé par le fait que** la découpe libre du flanc de la dent concave (13.1) et l'usinage de finition du flanc de la dent concave (13.1) ont lieu simultanément à l'aide du deuxième réglage de la machine (M2).

3. Procédé selon la revendication 1 ou 2, **caractérisé par le fait que** la coupe libre du flanc de la dent convexe (13.2) et l'usinage de finition du flanc de la dent convexe (13.2) ont lieu simultanément à l'aide du troisième réglage de la machine (M3).

4. Procédé selon la revendication 1, 2 ou 3, **caractérisé par le fait que** la transition de l'outil de taillage d'engrenages (100) du premier réglage machine (M1) au second réglage machine (M2) est effectuée alors que l'outil de taillage d'engrenages du porte-outil (100) est partiellement situé dans l'entre-dents (12).

5. Procédé selon la revendication 1, 2, 3 ou 4, **caractérisé en ce que** la coupe libre du flanc de dent concave (13.1) et la coupe libre du flanc de dent convexe (13.2) sont exécutées, la première valeur absolue prédéfinie (|Δ1|) étant identique à la deuxième valeur absolue prédéfinie (|Δ2|).

6. Procédé selon l'une quelconque des revendications 1 à 5, **caractérisé par le fait que** l'outil de taillage d'engrenages (100) est un outil de taillage d'engrenages à tête de coupe, qui est équipé de fraises à barre ou de plaquettes de fraise, dans lequel chacune des fraises à barre ou chacune des plaquettes de fraise, respectivement, a deux arêtes de coupe (12), pour pouvoir usiner le flanc de dent concave (13.1) et le flanc de dent convexe (13.2) simultanément pendant l'usinage par enlèvement de copeaux dans la méthode de plongée.

7. Procédé selon l'une quelconque des revendications 1 à 5, **caractérisé en ce que** l'outil de taillage d'engrenages (100) est un outil de taillage d'engrenages à tête de coupe, qui est équipé de fraises à barre ou d'inserts de fraise, dans lequel une partie des fraises à barre ou une partie des inserts de fraise, respectivement, ont chacune une arête de coupe (12), pour usiner le flanc de la dent concave (13.1) pendant l'usinage par enlèvement de copeaux dans la méthode de plongée, et dans lequel une autre partie des fraises ou une autre partie des inserts de fraise, respectivement, ont chacune une arête de coupe (12), pour usiner le flanc de dent convexe (13.2) pendant l'usinage par enlèvement de copeaux dans la méthode de plongée.

8. Procédé selon l'une des revendications 1 à 7, **caractérisé par le fait que** l'usinage de correction est exécuté pour corriger les erreurs d'angle de flanc (FWF) orientées dans la même direction, qui se sont produites au cours de l'usinage dans la méthode de plongée.

9. Procédé selon l'une quelconque des revendications 1 à 7, **caractérisé par le fait que** la pièce de l'engrenage conique (10) est soumise à une mesure avant d'effectuer l'usinage de correction, afin de pouvoir reconnaître les erreurs d'angle de flanc (FWF).

10. Procédé selon l'une des revendications 1 à 7, **caractérisé par le fait qu'**une pièce d'engrenage conique (10) d'une série de pièces d'engrenage conique est soumise à une mesure après l'usinage par enlèvement de copeaux dans la méthode de plongée, afin d'exécuter ensuite l'usinage de correction dans d'autres pièces d'engrenage conique de la série de pièces d'engrenage conique.

11. Procédé selon l'une quelconque des revendications 1 à 10, **caractérisé en ce qu'**il s'agit d'un procédé d'indexation unique ou d'un procédé d'indexation continue, dans lequel, dans le cas du procédé d'indexation continue, outre l'entraînement en rotation de l'outil de taillage d'engrenages (100), la pièce d'engrenage conique (10) est entraînée en rotation d'une manière couplée.
